# EUROPÄISCHE PATENTSCHRIFT

(11) **EP 1 855 033 B1**
(45) Veröffentlichungstag und Bekanntmachung des Hinweises auf die Patenterteilung: **15.06.2011**
(21) Anmeldenummer: 07007941.3
(22) Anmeldetag: 19.04.2007
(51) Int. Cl.: F16H 63/48

(54) **Getriebesperre**
Transmission lock
Verrouillage de transmission

(30) Priorität: 12.05.2006 DE 102006022963
(43) Veröffentlichungstag der Anmeldung: 14.11.2007
(73) Patentinhaber: GETRAG Getriebe- und Zahnradfabrik Hermann Hagenmeyer GmbH & Cie KG, 74199 Untergruppenbach (DE)
(72) Erfinder: Schweiher, Mark, 74348 Lauffen (DE); Flaig, Armin, Dr., 74523 Schwäbisch Hall (DE); Herdle, Lothar, 74629 Pfedelbach (DE)
(74) Vertreter: Steil, Christian

(56) Entgegenhaltungen:
- EP-A- 0 895 908
- EP-A- 1 679 456
- WO-A-03/095871
- DE-A1- 10 245 386
- JP-A- 2 212 246
- US-A- 3 610 004
- US-A- 6 124 789

## Beschreibung

Die vorliegende Erfindung betrifft eine Sperrenanordnung für ein Getriebe, insbesondere eine Parksperrenanordnung für ein automatisiertes Getriebe, wobei die Sperrenanordnung durch einen ersten Federspeicher in eine Sperrposition vorgespannt ist, in der das Getriebe gesperrt ist, und wobei die Sperrenanordnung mittels eines Aktuators von der Sperrposition in eine Freigabeposition versetzbar ist, in der das Getriebe entsperrt ist.

Derartige Parksperrenanordnungen sind für Automatikgetriebe, einschließlich von Wandlerautomaten, automatisierten Schaltgetrieben, Doppelkupplungsgetrieben, etc. bekannt.

Ferner betrifft die vorliegende Erfindung ein Verfahren zum Ansteuern einer solchen Sperrenanordnung.

Aus der DE 41 27 991 C2 ist eine Parksperre für ein Automatikgetriebe bekannt, mit einem Federspeicher, der die Parksperre generell in die Sperrposition drückt, und einem elektrohydraulischen Aktuator, mittels dessen die Parksperre in die Freigabeposition gedrückt werden kann. Zum Halten der Freigabeposition kann ein Druckmittelspeicher vorgesehen sein. In einer Abwandlung ist eine mechanische bistabile Kippstufe vorgesehen, die die Parksperre in beiden Positionen mechanisch festhält. Druckmedium ist dann nur für Änderungen der Positionen notwendig. Ein Positionssensor erfasst die Position der Parksperre.

Die DE 10 2004 021 981 A1 zeigt eine Parksperre mit Federspeicher zum Einstellen der Sperrposition und mit einer Löseeinrichtung zum Einstellen der Freigabeposition. Eine elektromagnetische Haltevorrichtung hält die Parksperre in der Freigabeposition. Die Löseeinrichtung ist mittels eines Getriebeaktuators betätigbar.

Eine Parksperre mit einer Haltevorrichtung zum Halten der Parksperre in der Freigabeposition ist auch aus der DE 198 34 156 A1, der DE 102 12 038 A1 und der DE 100 37 565 A1 bekannt. Durch elektronisches Ansteuern der Halteeinrichtung wird die Halteeinrichtung gelöst und die Parksperre mittels eines Federspeichers in die Sperrposition überführt. Dabei kann vorgesehen sein, die Position durch einen Sensor zu überwachen.

Die DE 198 34 156 A1 und die DE 100 37 565 A1 zeigen dabei Lösungen, die Parksperre durch einen Fluidaktuator in die Sperrposition zu überführen. Die Parksperre der DE 102 12 038 A1 verwendet hierzu einen Elektromotor.

Ferner zeigt auch die DE 198 04 640 A1 eine Parksperre, bei der die Position elektronisch überprüft wird. Bei Erkennung eines Fehlers wird eine aktuatorisch betätigbare Feststellbremse betätigt.

Aus der DE 102 45 386 A1 ist eine Sperrenanordnung mit der Merkmalen des Oberbegriffes des Anspruchs 1 bekannt. Auch ein Verfahren des Standes der Technik ist in der DE 102 45 386 A1 beschrieben.

Vor diesem Hintergrund ist es die Aufgabe der Erfindung, eine insbesondere hinsichtlich der Sicherheit verbesserte Getriebesperre anzugeben.

Diese Aufgabe wird bei der eingangs genannten Sperrenanordnung dadurch gelöst, dass die Sperrenanordnung eine elektronisch ansteuerbare Blockiereinrichtung aufweist, die dazu ausgelegt ist, die Sperrenanordnung in der Sperrposition mechanisch zu blockieren.

Durch die Blockiereinrichtung ist es möglich, mit höherer Sicherheit zu verhindern, dass sich die Parksperre löst. Insbesondere bei einem Abstellen des Kraftfahrzeuges an einer Steigung kann dies im Stand der Technik problematisch hinsichtlich der Sicherheit sein, insbesondere dann, wenn der Fahrer vergisst, eine Feststellbremse zu betätigen.

Durch die Blockiereinrichtung kann diesbezüglich eine zusätzliche Sicherheit geschaffen werden. Sollte der Aktuator (beispielsweise aufgrund eines Steuerungsfehlers oder Ähnliches) versehentlich angesteuert werden, die Sperrenanordnung in die Freigabeposition zu versetzen, wird dies durch die Blockiereinrichtung verhindert.

Der Aktuator zum Versetzen der Sperrenanordnung von der Sperrposition in die Freigabeposition kann ein Fluidaktuator sein, insbesondere ein elektrohydraulischer Zylinder, der Aktuator kann jedoch auch durch einen Elektromotor oder einen Elektromagneten oder dergleichen gebildet sein.

Durch die elektronische Ansteuerbarkeit der Blockiereinrichtung kann die Sperrenanordnung konstruktiv einfach aufgebaut sein, wobei gegenüber herkömmlichen Konstruktionen im Wesentlichen keine Abwandlungen notwendig sind.

Die erfindungsgemäße Blockiereinrichtung kann vorzugsweise auch dazu verwendet werden, die Sperrenanordnung in der Freigabeposition mechanisch zu blockieren. In diesem Fall wirkt die Blockiereinrichtung auch als Haltevorrichtung, die die Sperrenanordnung gegen die Kraft des ersten Federspeichers in der Freigabeposition hält. Hierdurch kann Energie zum Ansteuern des Aktuators, insbesondere Druckenergie eines Fluidaktuators, eingespart werden, da der Aktuator in der Freigabeposition nicht ständig mit Energie versorgt werden muss, um den ersten Federspeicher im gespannten Zustand zu halten.

Vorzugsweise weist die Blockiereinrichtung ein Blockierglied auf, das mittels eines elektronisch ansteuerbaren Stellgliedes zwischen einer Blockierposition und einer Entblockierposition versetzbar ist, wobei das Blockierglied die Sperrenanordnung in der Blockierposition formschlüssig blockiert.

Durch die formschlüssige Blockierung ist ein Versetzen der Sperrenanordnung in die Freigabeposition auch dann ausgeschlossen, wenn der Aktuator mit einer relativ hohen Kraft angesteuert wird.

Besonders bevorzugt ist es hierbei, wenn das Blockierglied durch einen zweiten Federspeicher in die Entblockierposition vorgespannt ist.

Durch diese Maßnahme kann die Parksperre so ausgebildet sein, dass bei fehlender Ansteuerung der Sperrenanordnung bzw. der Blockiereinrichtung ein selbsttätiges Verriegeln des Antriebsstranges möglich ist. Dies gilt insbesondere dann, wenn die Blockiereinrichtung vorzugsweise auch dazu verwendet wird, um die Sperrenanordnung in der Freigabeposition mechanisch zu blockieren.

Alternativ ist es auch möglich, das Blockierglied durch einen zweiten Federspeicher in die Blockierposition vorzuspannen. Mit dieser Ausführungsform ist es möglich, die Sperrenanordnung jeweils in der Sperrposition bzw. in der Freigabeposition zu halten bzw. zu blockieren, ohne dass Energie zugeführt werden muss. Lediglich bei Veränderungen der Position ist eine Energiezufuhr notwendig, um das Blockierglied in die Entblockierposition zu versetzen.

Das Stellglied zum Versetzen des Blockiergliedes kann beispielsweise durch einen elektromechanischen Wirkmechanismus realisiert sein, wie zum Beispiel eine Tauchspule, ein Proportionalmagnet, ein Stell- oder Schrittantrieb oder Ähnliches.

Gemäß einer weiteren bevorzugten Ausführungsform weist das Blockierglied Mittel auf, um das Blockierglied reibungsarm von der Blockierposition in die Entblockierposition zu versetzen.

Hierdurch kann die Kraft, die benötigt wird, um die Blockierwirkung aufzuheben, auf ein notwendiges Minimum reduziert werden.

Die Mittel können dabei so ausgestaltet sein, dass die sich berührenden Flächen von Blockierglied einerseits und Sperrenanordnung andererseits reibungsarm ausgebildet werden (durch entsprechende Oberflächenbehandlung, beispielsweise metallische oder nicht-metallische Beschichtungen).

Besonders bevorzugt ist es jedoch, wenn das Blockierglied einen drehbar gelagerten Wälzkörper aufweist, um das Blockierglied reibungsarm von der Blockierposition in die Entblockierposition zu versetzen.

Gemäß einer weiteren bevorzugten Ausführungsform weist die Sperrenanordnung ein erstes Sperrglied, das mit einem Abtrieb des Getriebes fest verbunden ist, und ein zweites Sperrglied auf, das mit einem Gehäuse des Getriebes fest verbunden ist.

Das erste Sperrglied kann dabei beispielsweise ein herkömmliches Parksperrenrad mit einer Verzahnung (beispielsweise am Außenumfang, aber auch an einer Axialfläche oder Ähnliches) sein. Das zweite Sperrglied kann beispielsweise eine Parksperrenklinke sein, die mittels eines dritten Federspeichers in die Freigabeposition vorgespannt ist.

Generell ist es möglich, das erste und das zweite Sperrglied in der Sperrposition reibschlüssig miteinander in Eingriff zu bringen.

Es ist jedoch bevorzugt, dass das erste und das zweite Sperrglied in der Sperrposition formschlüssig miteinander in Eingriff gebracht sind, um den Abtrieb mit dem Gehäuse zu verbinden und folglich das Getriebe zu sperren. Entsprechend sind das erste und das zweite Sperrglied in der Freigabeposition vorzugsweise voneinander gelöst, um den Abtrieb freizugeben.

Gemäß einer insgesamt bevorzugten Ausführungsform greift die Blockiereinrichtung an dem zweiten Sperrglied an, um die Sperrenanordnung mechanisch zu blockieren.

Die Blockiereinrichtung lässt sich durch diese Maßnahme konstruktiv einfach in eine bestehende Parksperrenanordnung integrieren. Weitere zusätzliche Bauteile sind in der Regel nicht erforderlich.

Ferner ist durch das Angreifen an dem zweiten Sperrglied gewährleistet, dass die Blockiereinrichtung unmittelbar auf eines der sperrenden Bauteile wirkt, so dass eine erhöhte Sicherheit gegeben ist.

Alternativ ist es jedoch auch möglich; dass die Blockiereinrichtung an einem Betätigungsglied des Aktuators angreift, um die Sperrenanordnung mechanisch zu blockieren.

Auch hierbei ist es konstruktiv einfach möglich, die Blockiereinrichtung zu integrieren. Ferner ist es vergleichsweise einfach, die Blockiereinrichtung sowohl zum Blockieren in der Sperrposition als auch zum Halten in der Freigabeposition zu verwenden.

Ferner ist es vorteilhaft, wenn ein erster Positionssensor vorgesehen ist, der erfasst, ob sich die Sperrenanordnung in der Sperrposition oder in der Freigabeposition befindet.

Mittels des Positionssensors kann in einer Steuereinrichtung eine Entscheidung darüber, ob die Blockiereinrichtung zu betätigen ist oder nicht, in Abhängigkeit davon getroffen werden, in welcher Position sich die Sperrenanordnung befindet. Auch ist es möglich, ein Betätigen der Blockiereinrichtung zu verhindern, wenn sich die Sperrenanordnung weder in der Sperrposition noch in der Freigabeposition befindet.

Erfindungsgemäss weist eine Steuervorrichtung Abfragemittel auf, um nach Versetzen der Sperrenanordnung in die Sperrposition festzustellen, ob eine Versorgungseinrichtung zum Versorgen des Aktuators noch in Betrieb ist, und, falls ja, die Blockiereinrichtung dazu anzusteuern, die Sperrenanordnung zu blockieren.

Somit ist es möglich, die Blockiereinrichtung dann zu verwenden, wenn aufgrund des Betriebs einer Fluidversorgungseinrichtung generell noch die Gefahr besteht, dass der Fluidaktuator betätigt wird, um die Sperrenanordnung wieder zu lösen.

Beispielsweise bei Abstellen des Fahrzeugs mit laufendem Motor könnte es zu einem Fehler in einem Fluidversorgungssystem kommen, wodurch es zum Lösen der Parksperre und damit zum Anrollen des Fahrzeugs kommen könnte.

Da ein Fluidaktuator häufig elektromagnetisch angesteuert wird, könnte folglich ein kleiner Impuls genügen, um den Druck in dem Fluidaktuator ansteigen zu lassen, so dass die Sperrenanordnung versehentlich gelöst wird.

Durch die Blockiereinrichtung kann dies verhindert werden, da diese dann angesteuert wird, wenn eine solche Fluidversorgungseinrichtung noch in Betrieb ist, wenn die Sperrenanordnung in die Sperrposition versetzt wird.

Ein solches Konzept ist auch bei anderen Aktuatoren (beispielsweise Elektromagneten oder Elektromotoren) anwendbar, indem mittels der Abfragemittel festgestellt wird, ob generell noch die Möglichkeit besteht, dass der Aktuator versehentlich angesteuert wird (wenn beispielsweise ein entsprechender elektrischer Versorgungskreis noch aktiv ist).

Gemäß einer weiteren bevorzugten Ausführungsform ist vorgesehen, dass die Steuervorrichtung dann, wenn die Abfragemittel nach Versetzen der Sperrenanordnung in die Sperrposition feststellen, dass die Versorgungseinrichtung zum Versorgen des Aktuators nicht in Betrieb ist, die Blockiereinrichtung nicht dazu ansteuert, die Sperrenanordnung zu blockieren, oder die Blockiereinrichtung dazu ansteuert in die Entblockierposition überzugehen.

Hierdurch wird erreicht, dass die Blockiereinrichtung dann nicht in Betrieb geht oder außer Betrieb versetzt wird, wenn aufgrund Inaktivität der Versorgungseinrichtung keine Gefahr besteht, dass der Aktuator gegen die Federvorspannung des ersten Federspeichers betätigt wird. Für diesen Fall ist die Wirkung des ersten Federspeichers vorgesehen, um die Sperrenanordnung in der Sperrposition zu halten.

Bei einem erfindungsgemäßen Verfahren zum Ansteuern einer erfindungsgemäßen Sperrenanordnung sind die Schritte vorgesehen, nach Versetzen der Sperrenanordnung in die Sperrposition festzustellen, ob eine Versorgungseinrichtung zum Versorgen des Aktuators in Betrieb ist, und, falls ja, die Blockiereinrichtung dazu anzusteuern, die Sperrenanordnung zu blockieren, und dann, wenn festgestellt wird, dass die Versorgungseinrichtung nicht in Betrieb ist, die Blockiereinrichtung nicht dazu anzusteuern, die Sperrenanordnung zu blockieren, bzw. dazu anzusteuern, die Sperrenanordnung nicht zu blockieren.

Insgesamt lässt sich die erfindungsgemäße Sperrenanordnung vorzugsweise in automatischen oder automatisierten Fahrzeuggetrieben mit einer Anfahr- oder Schaltkupplung verwenden, die im unbetätigten Zustand geöffnet ist, z.B. in Verbindung mit einer hydraulischen oder pneumatischen Steuerung.

Die Blockiereinrichtung wird erfindungsgemäß dazu verwendet, die Sperrenanordnung zu sichern, insbesondere bei laufendem Motor bzw. dann, wenn eine Versorgungseinrichtung für einen Aktuator zum Betätigen der Sperrenanordnung in die Freigabeposition noch aktiv ist. Zum Halten der Sperrenanordnung in der Freigabeposition kann eine separate Halteeinrichtung vorgesehen sein, wie sie auch im eingangs genannten Stand der Technik vorgeschlagen ist. Es ist vorzugsweise jedoch auch möglich, die Blockiereinrichtung dazu zu verwenden, auch die Haltefunktion auszuüben.

Ferner ist es möglich, eine mechanische Entriegelungseinrichtung vorzusehen, die es dem Fahrer erlaubt, die Sperreneinrichtung aus der Sperrposition in die Freigabeposition zu versetzen. Eine solche Art von Notentriegelung ist beispielsweise vorteilhaft, wenn das Fahrzeug bei nicht betriebsbereiter Steuerung, Ausfall der Bordspannungsversorgung, etc. abgeschleppt werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Ansicht eines Kraftfahrzeuggetriebes mit einer erfindungsgemäßen Parksperrenanordnung in einer Sperrposition;
- Figur 2: die Parksperrenanordnung der Figur 1 in einer Freigabeposition;
- Figur 3: eine der Figur 2 entsprechende Ansicht einer alternativen Ausführungsform einer erfindungsgemäßen Parksperrenanordnung;
- Figur 4: eine Abwandlung einer erfindungsgemäßen Parksperrenanordnung; und
- Figur 5: eine Ausführungsform eines erfindungsgemäßen Verfahrens zum Ansteuern einer Sperrenanordnung für ein Getriebe.

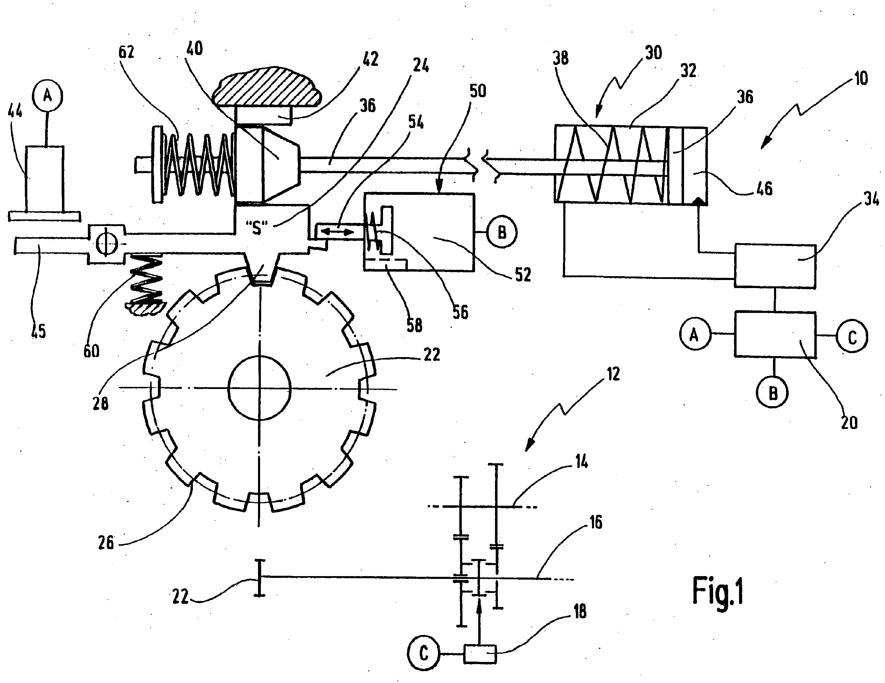

In Figur 1 ist eine erste Ausführungsform einer erfindungsgemäßen Parksperrenanordnung generell mit 10 bezeichnet.

Die Sperrenanordnung 10 ist als Parksperrenanordnung für ein automatisiertes Getriebe 12 ausgebildet. Das automatisierte Getriebe 12 ist im dargestellten Fall beispielhaft als Vorgelegegetriebe ausgebildet, mit beispielsweise zwei oder mehr Radsätzen, die mittels jeweiliger Schaltkupplungspakete alternativ in den Kraftfluss schaltbar sind.

Das Getriebe weist eine Eingangswelle 14 und eine Ausgangswelle 16 auf. Die Eingangswelle 14 ist, beispielsweise über eine Anfahrkupplung oder ein Doppelkupplungspaket, mit einem Antriebsmotor wie einem Verbrennungsmotor verbunden. Die Ausgangswelle 16 ist in der Regel formschlüssig mit Antriebsrädern des Kraftfahrzeuges verbunden und stellt einen Abtrieb dar.

Ein Schaltkupplungspaket ist jeweils mittels eines Schaltaktuators 18 betätigbar. Der Schaltaktuator 18 ist mit einer übergeordneten Steuervorrichtung 20 verbunden, die beispielsweise für das Ein- und Auslegen von Gangstufen, für das Betätigen der Anfahrkupplung etc. verantwortlich ist.

Die Steuervorrichtung 20 dient auch dazu, die Parksperrenanordnung 10 anzusteuern.

Die Parksperrenanordnung 10 weist ein erstes Sperrglied 22 in der Form eines Parksperrenrades mit Außenverzahnung auf. Das Parksperrenrad 22 ist drehfest mit der Ausgangswelle 16 verbunden.

Ferner weist die Parksperrenanordnung 10 ein zweites Sperrglied 24 in Form einer Sperrklinke auf. Die Sperrklinke 24 ist in Figur 1 in einer Sperrposition "S" dargestellt, in der ein Vorsprung der Sperrklinke in die Außenverzahnung des Sperrenrades 22 greift. Das zweite Sperrglied 24 ist gehäusefest gelagert, so dass die Ausgangswelle 16 in der Sperrposition S formschlüssig gegenüber dem Gehäuse des Getriebes 12 gesperrt ist.

Die Außenverzahnung des ersten Sperrgliedes 22 ist in Figur 1 bei 26 gezeigt. Ein Vorsprung bzw. Zahn des zweiten Sperrgliedes 24 ist in Figur 1 mit 28 bezeichnet.

Die Parksperrenanordnung 10 ist mittels einer insgesamt mit 30 bezeichneten Aktuatoranordnung betätigbar.

Die Aktuatoranordnung 30 weist einen Fluidaktuator 32 in Form eines einseitig wirkenden Hydraulik- oder Pneumatikzylinders auf. Der Fluidaktuator 32 ist mittels einer Fluidversorgungseinrichtung 34 ansteuerbar, die mit der Steuereinrichtung 20 verbunden ist.

Der Fluidaktuator 32 weist ein Betätigungsglied 36 auf, das einen Kolben und eine Kolbenstange beinhaltet. Das Betätigungsglied 36 ist mittels eines ersten Federspeichers 38 in die Sperrposition S vorgespannt.

An dem Betätigungsglied ist ein Sperrkonus 40 gelagert, der in der Sperrposition S zwischen das zweite Sperrglied 24 und ein Gehäuse 42 des Getriebes 12 geschoben ist und in dieser Position verhindert, dass das zweite Sperrglied 24 sich aus der Außenverzahnung 26 des ersten Sperrgliedes 22 löst.

Bei 44 ist ein erster Positionssensor gezeigt, der mit der Steuereinrichtung 20 verbunden ist. Der erste Positionssensor 44 erfasst die Position des zweiten Sperrgliedes 24, und zwar mittels eines Ansatzes 45 an dem zweiten Sperrglied 24. Es versteht sich jedoch, dass der Positionssensor 44 an jeder beliebigen Stelle angebracht werden kann, vorausgesetzt, er kann die Position des zweiten Sperrglieds erfassen, ob dieses sich also in der Sperrposition S befindet oder in einer noch zu beschreibenden Freigabeposition F.

Der Fluidaktuator 32 weist einen Druckraum 46 auf, in den mittels der Fluidversorgungseinrichtung 34 ein Druckmedium einführbar ist, um das Betätigungsglied 36 gegen die Kraft des ersten Federspeichers 38 aus der Sperrposition S in die noch zu beschreibende Freigabeposition F zu verschieben.

Sofern die Parksperrenanordnung 10 beispielsweise bei laufendem Motor des Kraftfahrzeuges in die Sperrposition S versetzt wird, könnte generell die Gefahr bestehen, dass der Druckraum 46 aufgrund eines Fehlers oder dergleichen in der Steuereinrichtung 20 oder in der Fluidversorgungseinrichtung 34 versehentlich mit Druckmedium befüllt wird. Dies würde dazu führen, dass die Parksperreneinrichtung 10 versehentlich von der Sperrposition S in die Freigabeposition F versetzt wird, so dass ein Fahrzeug an einem Gefälle selbsttätig anrollen könnte.

Dies wird im vorliegenden Fall durch eine Blockiereinrichtung 50 verhindert.

Die Blockiereinrichtung 50 weist ein Stellglied 52 auf, das mit der Steuereinrichtung 20 verbunden ist. Ferner weist die Blockiereinrichtung 50 ein Blockierglied 54 auf, das mittels des Stellgliedes 52 zwischen einer Blockierposition (in Figur 1 dargestellt) und einer Entblockierposition versetzbar ist.

In der gezeigten Blockierposition hintergreift das Blockierglied 54 formschlüssig einen Ansatz des zweiten Sperrgliedes 24, so dass die Sperrposition S beibehalten wird, selbst wenn der Fluidaktuator 32 versehentlich dazu betätigt würde, dass der Sperrkonus 40 das zweite Sperrglied 24 freigibt.

In Figur 1 ist ferner die Option dargestellt, dass die Blockiereinrichtung 50 einen zweiten Federspeicher 56 aufweist, mittels dessen das Blockierglied 54 generell in die Entblockierposition vorgespannt ist. In der Entblockierposition beeinflusst die Blockiereinrichtung die Sperrenanordnung nicht. Um das Blockierglied 52 in die gezeigte Blockierposition zu versetzen, ist folglich eine Ansteuerung des Stellgliedes 52 über die Steuereinrichtung 20 notwendig.

Ferner ist in Figur 1 ein optionaler zweiter Positionssensor 58 gezeigt, der die Position des Blockiergliedes 54 überwacht. Es versteht sich, dass der zweite Positionssensor 58 auch mit der Steuereinrichtung 20 verbunden ist.

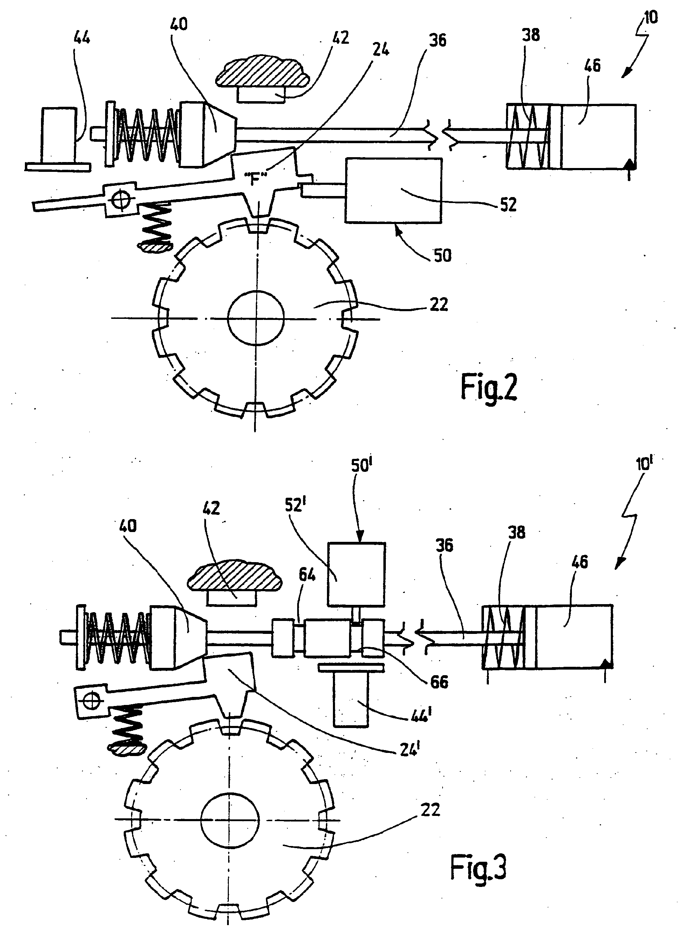

Ferner ist in Figur 1 ein dritter Federspeicher 60 dargestellt, mittels dessen das zweite Sperrglied 24 generell in die Freigabeposition "F" gedrückt wird, wie es in Figur 2 dargestellt ist.

Der dritte Federspeicher 60 ist so bemessen, dass er eine geringere Kraft auf das zweite Sperrglied 24 ausübt als der erste Federspeicher 38 bzw. ein vierter Federspeicher 62.

Der vierte Federspeicher 62 dient dazu, Energie für den Fall aufzunehmen, dass das Betätigungsglied 36 versetzt wird (mittels des ersten Energiespeichers 38), sich jedoch kein Vorsprung 28 über einer entsprechende Vertiefung der Außenverzahnung 26 befindet, so dass sich das zweite Sperrglied 24 nicht in die Sperrposition S bewegen kann. Der vierte Federspeicher 62 unterstützt damit die Wirkung des ersten Federspeichers 38.

Sobald die Ausgangswelle 16 etwas bewegt wird, drückt dann der vierte Federspeicher 62 den Sperrkonus 40 in die Sperrposition, und zwar gegen die Kraft des dritten Federspeichers 60.

Bei der erfindungsgemäßen Parksperrenanordnung 10 wird das zweite Sperrglied 24 in der Sperrposition S mittels der Blockiereinrichtung 50 blockiert. Selbst wenn aufgrund eines Fehlers der Druckraum 46 befüllt würde, würde sich die Sperrposition S nicht lösen.

Sobald die Energieversorgung abgeschaltet wird und insofern auch seitens der Fluidversorgungseinrichtung kein Druck mehr aufbaubar ist (die Gefahr einer versehentlichen Betätigung also beseitigt ist), kann auch die Ansteuerung der Blockiereinrichtung 50 aufgehoben werden. In diesem Fall wird das Blockierglied 54 mittels des zweiten Federspeichers 56 automatisch in die Entblockierposition versetzt. Dann würde dann das zweite Sperrglied 24 ausschließlich mittels des ersten Federspeichers 38 in der Sperrposition gehalten werden. Erst wenn die Energieversorgung wieder zugeschaltet wird, wird das Blockierglied 54 wieder in die Blockierposition versetzt, bis ein entsprechender Befehl der Steuereinrichtung zum Einlegen der Freigabeposition erfolgt. In diesem Fall wird zunächst die Blockiereinrichtung 50 abgeschaltet und anschließend der Druckraum 46 befüllt, so dass der Sperrkonus 40 in die Freigabeposition versetzt wird, in der der dritte Federspeicher 60 das zweite Sperrglied 24 aus der Sperrposition S lösen kann, so dass sich die in Figur 2 gezeigte Freigabeposition "F" einstellt.

Um zu verhindern, dass während des Betriebs ständig der Druckraum 46 zu beaufschlagen ist, kann die Blockiereinrichtung 50 auch dazu verwendet werden, um das zweite Sperrglied 24 in der gezeigten Freigabeposition F zu halten, indem das Blockierglied 54 in die Blockierposition versetzt wird und den Vorsprung des zweiten Sperrgliedes 24 wiederum hintergreift (diesmal jedoch von der anderen Seite).

In Figur 3 ist eine alternative Ausführungsform 10' einer erfindungsgemäßen Parksperrenanordnung gezeigt.

Die Parksperrenanordnung 10' der Figur 3 entspricht generell hinsichtlich Funktion und Aufbau der Parksperreneinrichtung 10 der Figuren 1 und 2. Gleiche Elemente sind daher mit gleichen Bezugszeichen gekennzeichnet. Im Folgenden werden lediglich Unterschiede dargestellt.

Figur 3 zeigt die Parksperrenanordnung 10' in einer Freigabeposition, in der die Blockiereinrichtung 50' dazu verwendet wird, die Freigabeposition zu halten. Dabei ist an dem Betätigungsglied 36 eine radiale Umfangsnut 66 vorgesehen, in die das Blockierglied der Blockiereinrichtung 50' greift. Eine weitere, axial versetzte Radialnut 64 dient dazu, das Betätigungsglied 36 in der Sperrposition zu halten.

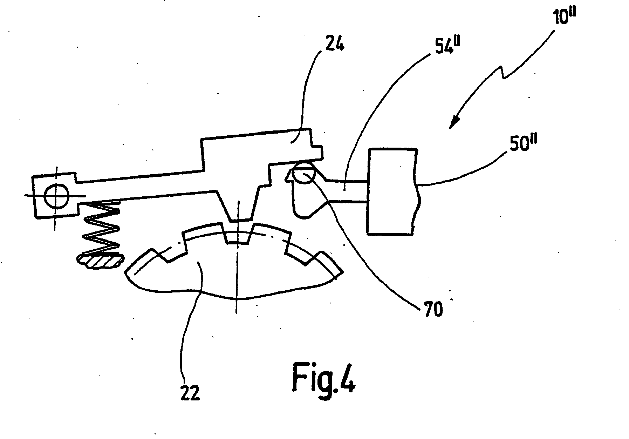

In Figur 4 ist eine Abwandlung einer erfindungsgemäßen Parksperrenanordnung 10" gezeigt.

Die Parksperrenanordnung 10" entspricht hinsichtlich Funktion und Aufbau generell der Parksperrenanordnung 10 der Figur 1. Im Folgenden werden lediglich Unterschiede erläutert.

So weist das Blockierglied 54" der Blockiereinrichtung 50" der Parksperrenanordnung 10" einen Wälzkörper 70 auf.

Der Wälzkörper 70 greift in der Blockierposition an dem zweiten Sperrglied 24 an. Sofern das Blockierglied 54" in die Entblockierposition zu versetzen ist, kann dies reibungsarm erfolgen, indem der Wälzkörper 70 an dem zweiten Sperrglied 24 abrollt. Da die auftretenden Reibungskräfte relativ gering sind, wenn das Blockierglied 54" die Sperrposition blockiert, wird zum Abstützen kein zweiter Wälzkörper benötigt.

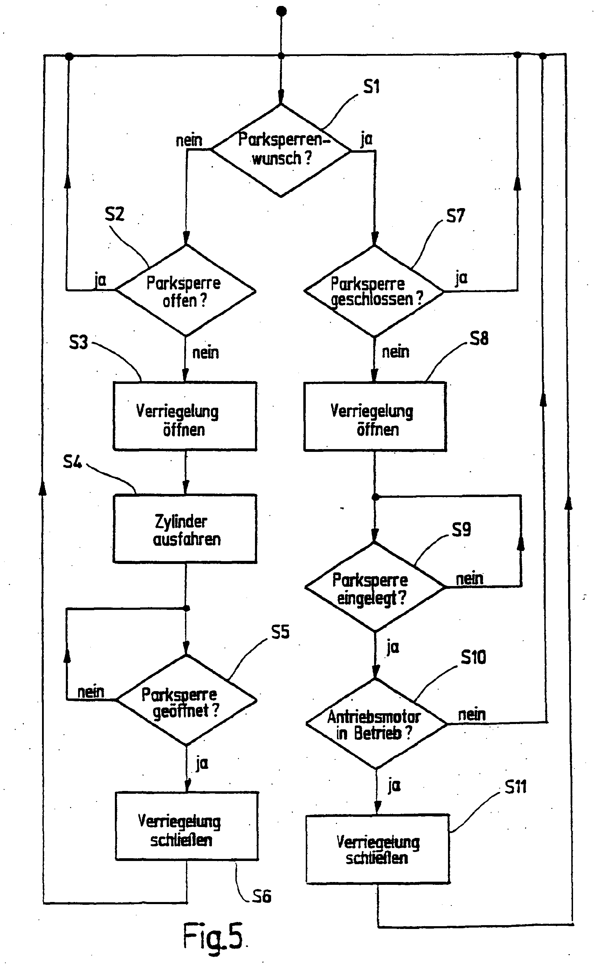

In Figur 5 ist eine Ausführungsform eines erfindungsgemäßen Verfahrens zum Ansteuern einer erfindungsgemäßen Sperrenanordnung generell mit 80 bezeichnet. Das Verfahren ist in Form eines Flussdiagrammes dargestellt und wird im Folgenden anhand der einzelnen Schritte erläutert.

Das Verfahren kann beispielsweise auf der Steuereinrichtung 20 ausgeführt werden, in Form eines elektronischen Programms, das in einer Endlosschleife läuft.

Zu Beginn wird in einem Schritt S1 abgefragt, ob die Parksperre einzulegen ist. Sofern dies nicht der Fall ist, wird in einem Schritt S2 geprüft, ob die Parksperrenanordnung sich in der Freigabeposition befindet. Wenn dies der Fall ist, geht das Programm zum Ausgangspunkt zurück. Falls die Parksperrenanordnung 10 sich nicht in der Freigabestellung befindet, wird die Parksperrenanordnung im Schritt S3 von der Sperrposition S in die Freigabeposition F versetzt.

Hierzu wird im Schritt S4 beispielsweise der Fluidaktuator 32 so angesteuert, dass der Druckraum 46 befüllt wird, dass das Betätigungsglied 36 in die Freigabeposition versetzt wird.

Im Schritt S5 wird überwacht, ob die Freigabeposition erreicht ist. Dies erfolgt so lange, bis dies tatsächlich der Fall ist.

Im Schritt S6 wird bei erreichter Freigabeposition F die Blockiereinrichtung 50 betätigt (die Verriegelung wird geschlossen), so dass nicht ständig Druck in dem Druckraum 46 aufrecht erhalten werden muss.

Sofern im Schritt S1 ein Parksperrenwunsch besteht, wird im Schritt S7 abgefragt, ob die Parksperrenanordnung sich in der Sperrposition befindet. Falls dies der Fall ist, geht der Prozess zum Ausgangspunkt zurück.

Sofern die Sperrposition S nicht erreicht ist, wird zunächst die Blockiereinrichtung in die Entblockierposition verbracht (die Verriegelung wird geöffnet), und zwar im Schritt S8.

Anschließend wird im Schritt S9 abgefragt, ob die Parksperre sich in der Sperrposition befindet, und zwar so lange, bis dies tatsächlich der Fall ist.

Anschließend im Schritt S10 abgefragt, ob der Antriebsmotor des Kraftfahrzeuges noch im Betrieb ist. Wenn dies nicht der Fall ist, wird die Blockiereinrichtung 50 nicht angesteuert und der Prozess geht zum Ausgangspunkt zurück.

Wenn der Motor jedoch noch in Betrieb ist, wird die Blockiereinrichtung 50 in die Blockierposition versetzt (die Verriegelung wird geschlossen), und zwar im Schritt S11.

## Patentansprüche

1. Sperrenanordnung (10) für ein Getriebe (12), insbesondere in Form einer Parksperrenanordnung (10) für ein automatisiertes Getriebe (12), wobei die Sperrenanordnung (10) durch einen ersten Federspeicher (38) in eine Sperrposition (S) vorgespannt ist, in der das Getriebe (12) gesperrt ist, und wobei die Sperrenanordnung (10) mittels eines Aktuators (32) von der Sperrposition (S) in eine Freigabeposition (F) versetzbar ist, in der das Getriebe entsperrt ist, wobei die Sperrenanordnung (10) eine elektronisch ansteuerbare Blockiereinrichtung (50) aufweist, die dazu ausgelegt ist, die Sperrenanordnung (10) in der Sperrposition (S) mechanisch zu blockieren,
**dadurch gekennzeichnet, dass** eine Steuervorrichtung (20) Abfragemittel aufweist, um nach Versetzen der Sperrenanordnung (10) in die Sperrposition (S) festzustellen, ob eine Fluidversorgungseinrichtung (34) zum Versorgen des Fluidaktuators (32) noch in Betrieb ist, und, falls ja, die Blockiereinrichtung (50) dazu ansteuert, die Sperrenanordnung (10) zu blockieren.

2. Sperrenanordnung nach Anspruch 1, **dadurch gekennzeichnet, dass** die Blockiereinrichtung (50) ein Blockierglied (54) aufweist, das mittels eines elektronisch ansteuerbaren Stellgliedes (52) zwischen einer Blockierposition und einer Entblockierposition versetzbar ist, wobei das Blockierglied (54) die Sperrenanordnung (10) in der Blockierposition formschlüssig blockiert.

3. Sperrenanordnung nach Anspruch 2, **dadurch gekennzeichnet, dass** das Blockierglied (54) durch einen zweiten Federspeicher in die Entblockierposition vorgespannt ist.

4. Sperrenanordnung nach Anspruch 2, **dadurch gekennzeichnet, dass** das Blockierglied durch einen zweiten Federspeicher in die Blockierposition vorgespannt ist.

5. Sperrenanordnung nach einem der Ansprüche 2 bis 4, **dadurch gekennzeichnet, dass** das Blockierglied (54) Mittel (70,72) aufweist, um das Blockierglied (54) reibungsarm von der Blockierposition in die Entblockierposition zu versetzen.

6. Sperrenanordnung nach Anspruch 5, **dadurch gekennzeichnet, dass** das Blockierglied (54) einen drehbar gelagerten Wälzkörper (70) aufweist, um das Blockierglied reibungsarm von der Blockierposition in die Entblockierposition zu versetzen.

7. Sperrenanordnung nach einem der Ansprüche 1 bis 6, **dadurch gekennzeichnet, dass** die Sperrenanordnung (10) ein erstes Sperrglied (22), das mit einem Abtrieb (16) des Getriebes (12) fest verbunden ist, und ein zweites Sperrglied (24) aufweist, das mit einem Gehäuse (42) des Getriebes (12) fest verbunden ist.

8. Sperrenanordnung nach Anspruch 7, **dadurch gekennzeichnet, dass** das erste und das zweite Sperrglied (22, 24) in der Sperrposition (S) formschlüssig miteinander in Eingriff gebracht sind, um den Abtrieb (16) mit dem Gehäuse (12) zu verbinden und folglich das Getriebe (12) zu sperren.

9. Sperrenanordnung nach Anspruch 7 oder 8, **dadurch gekennzeichnet, dass** das erste und das zweite Sperrglied (22, 24) in der Freigabeposition (F) voneinander gelöst sind, um den Abtrieb (16) freizugeben.

10. Sperrenanordnung nach einem der Ansprüche 7 bis 9, **dadurch gekennzeichnet, dass** die Blockiereinrichtung (50) an dem zweiten Sperrglied (24) angreift, um die Sperrenanordnung (10) mechanisch zu blockieren.

11. Sperrenanordnung nach einem der Ansprüche 7 bis 10, **dadurch gekennzeichnet, dass** das die Blockiereinrichtung (50) an einem Betätigungsglied (36) des Aktuators (32) angreift, um die Sperrenanordnung (10) mechanisch zu blockieren.

12. Sperrenanordnung nach einem der Ansprüche 1 bis 11, **gekennzeichnet durch** einen ersten Positionssensor (44), der erfasst, ob sich die Sperrenanordnung (10) in der Sperrposition (S) oder in der Freigabeposition (F) befindet.

13. Sperrenanordnung nach einem der Ansprüche 1 bis 12, **dadurch gekennzeichnet, dass** die Steuervorrichtung (20) dann, wenn die Abfragemittel nach Versetzen der Sperrenanordnung (10) in die Sperrposition (S) feststellen, dass die Fluidversorgungseinrichtung (34) zum Versorgen des Fluidaktuators (32) nicht in Betrieb ist, die Blockiereinrichtung (50) nicht dazu ansteuert, die Sperrenanordnung zu blockieren.

14. Verfahren zum Ansteuern einer Sperrenanordnung (10) nach einem der Ansprüche 1 bis 13, mit den Schritten, nach Versetzen der Sperrenanordnung (10) in die Sperrposition (S) festzustellen, ob eine Versorgungseinrichtung (34) zum Versorgen des Aktuators (32) in Betrieb ist, und, falls ja, die Blockiereinrichtung (50) dazu anzusteuern, die Sperrenanordnung (10) zu blockieren, und dann, wenn die Abfragemittel nach Versetzen der Sperrenanordnung (10) in die Sperrposition (S) feststellen, dass die Versorgungseinrichtung (34) zum Versorgen des Aktuators (32) nicht in Betrieb ist, die Blockiereinrichtung nicht dazu anzusteuern, die Sperrenanordnung (10) zu blockieren.

## Claims

1. Lock arrangement (10) for a transmission (12), in particular in the form of a parking-lock arrangement (10) for an automated transmission (12), the lock arrangement (10) being prestressed by a first spring accumulator (38) into a locking position (S) in which the transmission (12) is locked, and the lock arrangement (10) being capable of being shifted by means of an actuator (32) from the locking position (S) into a release position (F) in which the transmission is released, wherein the lock arrangement (10) has an electronically activatable blocking device (50) which is designed for blocking the lock arrangement (10) mechanically in the locking position (S), **characterized in that** a control device (20) has interrogation means in order, after the shift of the lock arrangement (10) into the locking position (S), to ascertain whether a fluid supply device (34) for supplying the fluid actuator (32) is still in operation, and, if so, activates the blocking device (50) to block the lock arrangement (10).

2. Lock arrangement according to Claim 1, **characterized in that** the blocking device (50) has a blocking member (54) which can be shifted between a blocking position and an unblocking position by means of an electronically activatable actuating member (52), the blocking member (54) blocking the lock arrangement (10) positively in the blocking position.

3. Lock arrangement according to Claim 2, **characterized in that** the blocking member (54) is prestressed into the unblocking position by a second spring accumulator.

4. Lock arrangement according to Claim 2, **characterized in that** the blocking member is prestressed into the blocking position by means of a second spring accumulator.

5. Lock arrangement according to one of Claims 2 to 4, **characterized in that** the blocking member (54) has means (70, 72) for shifting the blocking member (54) from the blocking position into the unblocking position with low friction.

6. Lock arrangement according to Claim 5, **characterized in that** the blocking member (54) has a rotatably mounted rolling body (70) in order to shift the blocking member from the blocking position into the unblocking position with low friction.

7. Lock arrangement according to one of Claims 1 to 6, **characterized in that** the lock arrangement (10) has a first locking member (22), which is firmly connected to a power take-off (16) of the transmission (12), and a second locking member (24) which is movably supported at a housing (42) of the transmission (12).

8. Lock arrangement according to Claim 7, **characterized in that** the first and the second locking member (22, 24) are brought positively into engagement with one another in the locking position (S), in order to connect the power take-off (16) to the housing (12) and consequently to lock the transmission (12).

9. Lock arrangement according to Claim 7 or 8, **characterized in that** the first and the second locking member (22, 24) are released from one another in the release position (F), in order to release the power take-off (16).

10. Lock arrangement according to one of Claims 7 to 9, **characterized in that** the blocking device (50) engages on the second locking member (24) in order to block the lock arrangement (10) mechanically.

11. Lock arrangement according to one of Claims 7 to 10, **characterized in that** the blocking device (50) engages on an actuating member (36) of the actuator (32) in order to block the lock arrangement (10) mechanically.

12. Lock arrangement according to one of Claims 1 to 11, **characterized by** a first position sensor (44) which detects whether the lock arrangement (10) is in the locking position (S) or in the release position (F).

13. Lock arrangement according to one of Claims 1 to 12, **characterized in that**, when, after the shift of the lock arrangement (10) into the locking position (S), the interrogation means ascertain that the fluid supply device (34) for supplying the fluid actuator (32) is not in operation, the control device (20) does not activate the blocking device (50) to block the lock arrangement.

14. Method for activating a lock arrangement (10) according to one of Claims 1 to 13, with the steps of ascertaining, after the shift of the lock arrangement (10) into the locking position (S), whether a supply device (34) for supplying the actuator (32) is in operation, and, if so, of activating the blocking device (50) to block the lock arrangement (10), and then, when, after the shift of the lock arrangement (10) into the locking position (S), it is ascertained that the supply device (34) for supplying the actuator (32) is not in operation, of not activating the blocking device to block the lock arrangement (10).

## Revendications

1. Agencement de verrouillage (10) pour une transmission (12), en particulier en forme d'agencement de verrouillage de stationnement (10) pour une transmission automatisée (12), l'agencement de verrouillage (10) étant précontraint par un premier accumulateur à ressort (38) dans une position de verrouillage (S) dans laquelle la transmission (12) est verrouillée, et l'agencement de verrouillage (10) pouvant être déplacé au moyen d'un actionneur (32) de la position de verrouillage (S) dans une position de libération (F) dans laquelle la transmission est déverrouillée, l'agencement de verrouillage (10) présentant un dispositif de blocage (50) à commande électronique qui est conçu pour bloquer mécaniquement l'agencement de verrouillage (10) dans la position de verrouillage (S),
**caractérisé en ce qu'**un dispositif de commande (20) présente des moyens d'interrogation pour établir, après le déplacement de l'agencement de verrouillage (10) dans la position de verrouillage (S), si un dispositif d'alimentation en fluide (34) pour alimenter l'actionneur de fluide (32) fonctionne encore, et si c'est le cas, commande au dispositif de blocage (50) de bloquer l'agencement de verrouillage (10).

2. Agencement de verrouillage selon la revendication 1, **caractérisé en ce que** le dispositif de blocage (50) présente un organe de blocage (54) qui peut être déplacé au moyen d'un organe de réglage (52) à commande électronique entre une position de blocage et une position de déblocage, l'organe de blocage (54) bloquant l'agencement de verrouillage (10) dans la position de blocage par engagement par correspondance géométrique.

3. Agencement de verrouillage selon la revendication 2, **caractérisé en ce que** l'organe de blocage (54) est précontraint par un deuxième accumulateur à ressort dans la position de déblocage.

4. Agencement de verrouillage selon la revendication 2, **caractérisé en ce que** l'organe de blocage est précontraint par un deuxième accumulateur à ressort dans la position de blocage.

5. Agencement de verrouillage selon l'une quelconque des revendications 2 à 4, **caractérisé en ce que** l'organe de blocage (54) présente des moyens (70, 72) pour déplacer, avec peu de frottement, l'organe de blocage (54) de la position de blocage dans la position de déblocage.

6. Agencement de verrouillage selon la revendication 5, **caractérisé en ce que** l'organe de blocage (54) présente un corps de roulement (70) monté à rotation, pour déplacer, avec peu de frottement, l'organe de blocage de la position de blocage dans la position de déblocage.

7. Agencement de verrouillage selon l'une quelconque des revendications 1 à 6, **caractérisé en ce que** l'agencement de verrouillage (10) présente un premier organe de verrouillage (22) qui est connecté fixement à une prise de force (16) de la transmission (12), et un deuxième organe de verrouillage (24) qui est connecté fixement à un boîtier (42) de la transmission (12).

8. Agencement de verrouillage selon la revendication 7, **caractérisé en ce que** le premier et le deuxième organe de verrouillage (22, 24) sont amenés en prise par engagement par correspondance géométrique l'un avec l'autre dans la position de verrouillage (S), afin de connecter la prise de force (16) avec le boîtier (42) et par conséquent bloquer la transmission (12).

9. Agencement de verrouillage selon la revendication 7 ou 8, **caractérisé en ce que** le premier et le deuxième organe de verrouillage (22, 24) sont détachés l'un de l'autre dans la position de libération (F), afin de libérer la prise de force (16).

10. Agencement de verrouillage selon l'une quelconque des revendications 7 à 9, **caractérisé en ce que** le dispositif de blocage (50) vient en prise sur le deuxième organe de verrouillage (24) afin de bloquer mécaniquement l'agencement de verrouillage (10).

11. Agencement de verrouillage selon l'une quelconque des revendications 7 à 10, **caractérisé en ce que** le dispositif de blocage (50) vient en prise sur un organe d'actionnement (36) de l'actionneur (32) afin de bloquer mécaniquement l'agencement de verrouillage (10).

12. Agencement de verrouillage selon l'une quelconque des revendications 1 à 11, **caractérisé par** un premier capteur de position (44) qui détecte si l'agencement de verrouillage (10) se trouve dans la position de verrouillage (S) ou dans la position de libération (F).

13. Agencement de verrouillage selon l'une quelconque des revendications 1 à 12, **caractérisé en ce que** le dispositif de commande (20), lorsque les moyens d'interrogation établissent après le déplacement de l'agencement de verrouillage (10) dans la position de verrouillage (S), que le dispositif d'alimentation en fluide (34) pour alimenter l'actionneur de fluide (32) ne fonctionne pas, ne commande pas au dispositif de blocage (50) de bloquer l'agencement de verrouillage.

14. Procédé de commande d'un agencement de verrouillage (10) selon l'une quelconque des revendications 1 à 13, comprenant les étapes, après le déplacement de l'agencement de verrouillage (10) dans la position de verrouillage (S), consistant à établir si un dispositif d'alimentation (34) pour l'alimentation de l'actionneur (32) fonctionne, et si c'est le cas, à commander au dispositif de blocage (50) de bloquer l'agencement de verrouillage (10), et ensuite, si les moyens d'interrogation après le déplacement de l'agencement de verrouillage (10) dans la position de verrouillage (S) constatent que le dispositif d'alimentation (34) pour l'alimentation de l'actionneur (32) ne fonctionne pas, à ne pas commander au dispositif de blocage de bloquer l'agencement de verrouillage (10).
